# EUROPÄISCHE PATENTANMELDUNG

(11) **EP 1 298 689 A2**
(43) Veröffentlichungstag der Anmeldung: **02.04.2003**
(21) Anmeldenummer: 02021159.5
(22) Anmeldetag: 24.09.2002
(51) Int. Cl.: H01H 47/00

(54) **Anordnung zur Überwachung von Motorstartern**

(30) Priorität: 28.09.2001 DE 10148155
(71) Anmelder: Moeller GmbH, 53115 Bonn (DE)
(72) Erfinder: Skupin, Johann, 53840 Troisdorf (DE)

(57) **Zusammenfassung**

Die Erfindung betrifft eine Anordnung zur Überwachung von an eine Stromzuleitung (3) angeschlossenen und über einen Steuerbus (2) mit einer Steuereinrichtung (7) kommunizierenden Motorstartern (1.1, 1.2), wobei jeder Motorstarter (1.1, 1.2) eine Messeinrichtung (12) zur Messung des durch den Motorstarter geleiteten Stroms aufweist und in der Stromzuleitung (3) ein Schutzschalter (5) vorgesehen ist und dem Schutzschalter (5) eine Auslöseeinrichtung (6) zugeordnet ist, die von der Steuereinrichtung (7) über den Steuerbus (2) in Abhängigkeit vom gemessenen Strom ansteuerbar ist

## Beschreibung

Die Erfindung betrifft eine Anordnung zur Überwachung von an eine Stromzuleitung angeschlossenen und über einen Steuerbus mit einer Steuereinrichtung kommunizierenden Motorstartern.

Motorstarter werden dazu verwendet, Elektromotoren einer Maschine oder Anlage bei entsprechendem Bedarf - automatisch oder von Hand - zu starten bzw. zu stoppen und während des Betriebs unter anderem die Leistungsaufnahme des angeschlossenen Motors zu überwachen, um einen Schutz gegen unvorhergesehenes Blockieren des Motors zu gewährleisten. Zu diesem Zweck weisen Motorstarter üblicherweise eine Messeinrichtung zur Messung des durch den Motorstarter geleiteten Stroms auf, so dass neben der reinen Motorsteuerung ein Motorstarter auch Motorschutzaufgaben übernimmt.

Eine problematische und unter Umständen gefahrbringende Situation kann immer dann eintreten, wenn ein im Motorstarter angeordnetes und zur Ein- bzw. Ausschaltung des Motors vorgesehenes Schütz, welches die Stromzuführung zum Motor herstellt bzw. unterbricht, infolge eines aufgetretenen hohen Stromflusses, z. B. bei einem Kurzschluss durch Verschweißen seiner Kontakte blockiert bzw. durch andere gegebenenfalls mechanische Probleme in seiner Schaltbarkeit blockiert ist, so dass der an den Motorstarter angeschlossene Elektromotor trotz eines bewirkten Ausschaltvorganges nicht von der Stromzuleitung getrennt werden kann. Auch können in einem solchen Fall durch den Motorstarter durch Kurz- oder Nebenschlüsse verursachte Fehlströme auftreten

Aus der DE-AS 29 20 188 ist eine Schaltungsanordnung zur Überwachung der Hauptstrombahnen von Schützen bekannt geworden, bei welcher der Schaltzustand des Schützes mit dem Messergebnis einer den Strom messenden Messeinrichtung verglichen wird, so dass bei Vorliegen eines verschweißten oder anderweitig nicht mehr schaltbaren Schützes die Stromzufuhr zum Motorstarter und damit zum Motor unterbrochen werden kann. Diese bekannte Schaltungsanordnung bedingt jedoch eine Anschlusstechnik mit konventioneller Verdrahtung, bei der jeder einzelne Kontakt konventionell, d. h. parallel auf die Anschaltbaugruppen vor Ort verdrahtet wird. Die Folge ist eine größere Anzahl von Schraubklemmen, Ein-/Ausgangskarten und Leitungssträngen, womit die Kosten für Planung, Projektierung und Verdrahtung enorm ansteigen.

Hingegen hilft die Vernetzung einzelner Geräte, wie Motorstarter, über ein Bussystem mit einem Steuerbus, diese Kosten zu senken. Dabei wird die Verdrahtung enorm reduziert, durch vorverdrahtete Baugruppen der Projektierungsaufwand verringert und die Inbetriebnahme durch eine geringere Anzahl an Schraubklemmen und die bequeme Adressierung über die Bussoftware vereinfacht. Motorstarter, die über einen solchen Steuerbus mit einer Steuereinrichtung kommunizieren, werden daher bereits mit Erfolg eingesetzt. Der Kurzschlussschutz und damit der Schutz vor einem nicht mehr schaltbaren Schütz innerhalb eines an den Steuerbus anschließbaren Motorstarters wird außerhalb des Gerätes mit einem auf Kurzschlussstrom reagierenden Schutzschalter realisiert, wobei in der Praxis mehrere Motorstarter, die an einer gemeinsamen Stromzuleitung angeschlossen sind, über einen einzigen Schutzschalter abgesichert werden. Eine solche, in der Praxis an sich bewährte Schaltung kann jedoch nicht verhindern, dass ein Schütz eines Motorstarters bei einem Kurzschluss beschädigt werden kann oder verschweißen kann. Darüber hinaus wird bei einem solchermaßen vorgenommenen Gruppenkurzschlussschutz mit mehreren an eine gemeinsame Stromzuleitung angeschlossenen Motorstartern und lediglich einem in der Stromzuleitung vorgesehenen Schutzschalter die Berechnung des Kurzschlussschutzes sehr komplex und kann zu Fehlern in der Auslegung führen. Insbesondere kann ein zu hoher Widerstand in den stromführenden Leitungen zu einer Begrenzung des Kurzschlussstromes auf ein Niveau führen, welches unterhalb der Auslöseschwelle des Schutzschalters liegt, und so die gewünschte Auslösung verhindern. Der in diesem Fall fließende Strom wird aber höchstwahrscheinlich dennoch zu einer Verschweißung des im Motorstarter angeordneten Schützes führen und nachfolgend eine Abschaltung des Motorstarters verhindern, was zu einer gefahrbringenden Situation führen kann.

Die Erfindung hat sich daher die Aufgabe gestellt, eine Anordnung zur Überwachung von an eine Stromzuleitung angeschlossenen und über einen Steuerbus mit einer Steuereinrichtung kommunizierenden Motorstartern vorzuschlagen, bei der eine Detektion eines blockierten, beispielsweise verschweißten Schützes erfolgen kann und eine gewollte Abschaltung des Schutzschalters innerhalb einer möglichst kurzen Reaktionszeit herbeigeführt werden kann.

Zur Lösung der gestellten Aufgabe wird erfindungsgemäß eine Anordnung gemäß den im Patentanspruch 1 angegebenen Merkmalen vorgeschlagen. Vorteilhafte Ausgestaltungen und Weiterbildungen der erfindungsgemäßen Anordnung sind Gegenstand der Unteransprüche.

Zur Lösung der gestellten Aufgabe wird vorgeschlagen, dass dem Schutzschalter eine Auslöseeinrichtung zugeordnet ist, die von der Steuereinrichtung über den Steuerbus in Abhängigkeit vom gemessenen Strom ansteuerbar ist. Die Erfindung nutzt von daher die Eigenschaften der bekannten, über einen Steuerbus mit einer Steuereinrichtung kommunizierenden Motorschutzschalter, die üblicherweise neben der Anschlussmöglichkeit an den Steuerbus über eine integrierte Stromsensorik bzw. über eine Messeinrichtung zur Messung des durch den Motorstarter geleiteten Stroms verfügen, um Motorschutzfunktionen zu erfüllen. Durch eine einfache Softwaremanipulation des Motorstarters ist es möglich, den von der Messeinrichtung gemessenen Strom über den Steuerbus an die Steuereinrichtung rückzumelden, so dass diese eine Auswertung vornehmen kann, dergestalt, ob ein verschweißtes oder beschädigtes Schütz innerhalb eines Motorstarters vorliegt oder nicht. Hat nämlich die Steuereinrichtung über den Steuerbus an einen Motorstarter einen Ausschaltbefehl gesendet und wird nachfolgend von der Messeinrichtung des angesprochenen Motorstarters ein dennoch aufrechterhaltener Strom zurückgemeldet, so hat das Schütz des angesprochenen Motorstarters nicht ordnungsgemäß geschaltet. Es kann nunmehr von der Steuereinrichtung über den Steuerbus die Auslöseeinrichtung angesprochen werden, welche ihrerseits den Schutzschalter aktiviert und öffnet, so dass der ungewollte Stromfluss unterbrochen und die Anlage in einen sicheren Zustand überführt wird. Es erfolgt von daher eine Ansteuerung der Auslöseeinrichtung für den Schutzschalter von der Steuereinrichtung über den Steuerbus in Abhängigkeit vom gemessenen Strom in den jeweiligen Motorstartern, d. h. in Abhängigkeit von dem durch den jeweiligen Motorstarter geleiteten Strom.

Es kann von den Motorstartern nicht nur der konkret gemessene Strom an die Steuereinrichtung zurückgemeldet werden, sondern auch lediglich eine den gemessenen Strom repräsentierende Rückmeldung, d.h. vorliegender oder nicht vorliegender Stromfluss, was zu einer Vereinfachung der über den Steuerbus an die Steuereinrichtung rückzumeldenden Daten führt.

Der Steuerbus der erfindungsgemäßen Anordnung kann insbesondere als sogenanntes AS-Interface-Bussystem, kurz ASi-Bussystem ausgebildet sein, welches an sich bekannt ist und für binäre Sensoren (Öffner-, Schließer- und Hilfskontakte) und Aktoren (Relais, Schütze, Lampen) in der untersten Feldebene konzipiert ist.

Die Auslöseeinrichtung für den Schutzschalter kann einen mit dem Steuerbus kommunizierenden ASi-Slave und einen von diesem steuerbaren U- oder A-Auslöser umfassen, der in an sich bekannter Weise entweder bei Unterschreiten einer bestimmten Spannung (U-Auslöser) bzw. Überschreiten eines bestimmten Stromwertes (A-Auslöser) aktiviert wird und den Schutzschalter in der gewünschten Weise zum Unterbrechen der Stromzuleitung ansteuert.

Ferner kann die Stromzuleitung in an sich bekannter Weise als Energiebus ausgebildet sein, so dass mindestens einer, vorzugsweise aber eine Vielzahl von Motorstartern einerseits an die Stromzuleitung und andererseits an den Steuerbus anschließbar sind, wobei alle diese Motorstarter über eine gemeinsame Steuereinrichtung steuerbar und mit einem einzigen in der Stromzuleitung angeordneten Schutzschalter abgesichert sind.

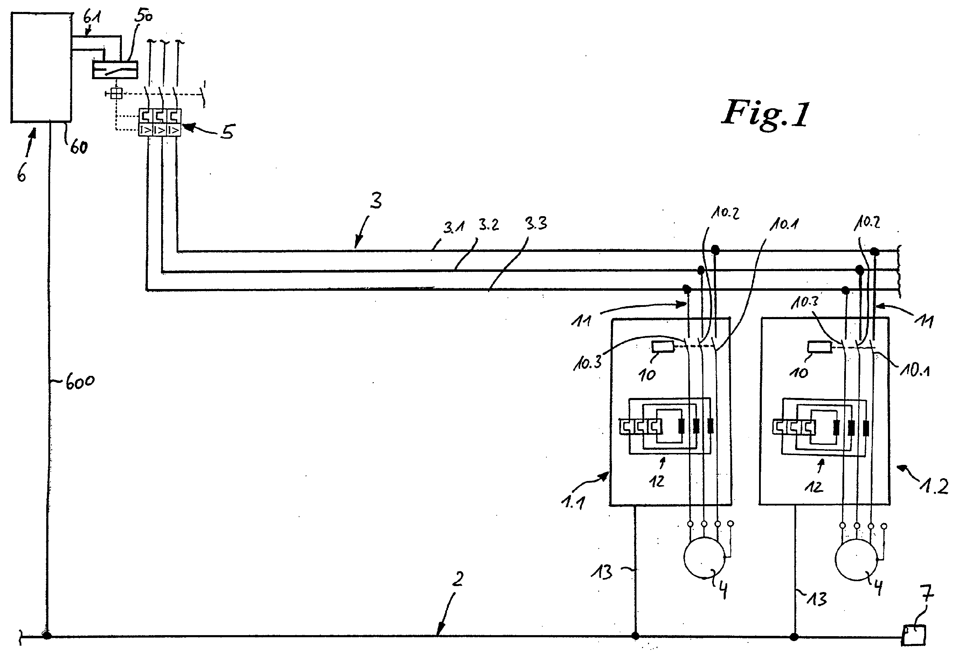

Weitere Ausgestaltungen und Einzelheiten der Erfindung werden nachfolgend anhand des Ausführungsbeispiels in der Figur 1 näher erläutert.

Die Figur 1 zeigt mehrere Motorstarter 1.1, 1.2, die eingangsseitig über Stromanschlussleitungen 11 an eine dreiphasige Stromzuleitung 3 mit Phasen 3.1, 3.2, 3.3 angeschlossen sind. Die Stromzuleitung 3 ist hierbei als Energiebus ausgeführt. Die Darstellung mit zwei Motorstartern 1.1 und 1.2 ist lediglich beispielhaft anzusehen, es können auch nur ein Motorstarter oder mehr als zwei solche Motorstarter in gleicher Anordnung vorgesehen sein. Die von jeder Phase 3.1, 3.2, 3.3 abgezweigten Stromanschlussleitungen 11 werden durch die Motorstarter 1.1, 1.2 hindurch zu je einem an die jeweiligen Motorstarter 1.1, 1.2 angeschlossenen Elektromotor 4 hindurchgeführt. Jeder Motorstarter 1.1, 1.2 sowie eine beliebige weitere Anzahl von hier nicht dargestellten weiteren an die Stromzuleitung 3 anschließbaren Motorstartern umfasst jeweils ein Schütz 10 mit Hauptkontakten 10.1, 10.2, 10.3, die gleichzeitig betätigt werden und jeweils eine Phase der Stromanschlussleitung 11 zum Motor 4 schalten. Darüber hinaus umfasst jeder Motorstarter 1.1, 1.2 eine Messeinrichtung 12, mittels derer der durch den Motorstarter 1.1 bzw. 1.2 von der Stromzuleitung 3 zum Motor 4 geleitete Strom gemessen werden kann, so dass der Elektromotor 4 in an sich bekannter Weise vor Beschädigung geschützt wird.

Die Schaltbefehle zum Öffnen bzw. Schließen des Schützes 10 im Innern der Motorstarter 1.1 bzw. 1.2 können entweder von hier nicht dargestellten, an den Motorstartern 1.1, 1.2 angeordneten Handschaltern oder aber von einer Steuereinrichtung 7, z.B. einer SPS bewirkt werden, die über einen Steuerbus 2, beispielsweise einen ASi-Bus mit den einzelnen Motorstartern 1.1, 1.2 durch eine entsprechende Adressierung derselben kommuniziert. Zu diesem Zweck ist jeder Motorstarter 1.1, 1.2 über eine Busleitung 13 an den Steuerbus 2 angeschlossen, so dass eine bidirektionale Kommunikation zwischen der Steuereinrichtung 7 und den Motorstartern 1.1, 1.2 ermöglicht ist. Sämtliche einerseits an die Stromzuleitung 3 angeschlossene und andererseits über den Steuerbus 2 mit der Steuereinrichtung 7 kommunizierende Motorstarter 1.1, 1.2 sind überdies gegen einen eventuell auftretenden Kurzschluss gemeinsam durch einen in die Stromzuleitung 3 integrierten Schutzschalter 5 abgesichert, der bei Vorliegen eines Kurzschlussstromes von beispielsweise mehr als 280 A den Stromfluss durch die Stromzuleitung 3 unterbricht, um die Motorstarter 1.1, 1.2 vor einer Beschädigung zu schützen und Gefahren abzuwenden.

In der Praxis kann insbesondere bei Anschluss einer Vielzahl von Motorstartern 1.1, 1.2 und weiteren solchen Motorstartern an eine gemeinsame Stromzuleitung 3 die Auslegung des Schutzschalters 5 und die Berechnung des erforderlichen Auslösestromwertes schwierig werden, da ein zu hoher Widerstand in den stromführenden Leitungen zu einer Begrenzung des Kurzschlussstromes auf ein unterhalb des Auslösewertes des Schutzschalters 5 liegendes Niveau führen kann und somit die Auslösung des Schutzschalters 5 verhindert wird, obwohl der in diesem Fall fließende Strom höchstwahrscheinlich zu einer Verschweißung eines oder mehrerer Schütze 10 führen kann. Darüber hinaus können auch mechanische oder sonstige Beschädigungen der Schütze 10 der Motorstarter 1.1, 1.2 im Betrieb auftreten, die nachfolgend ein gewünschtes Öffnen des Schützes und damit Stoppen des angeschlossenen Elektromotors 4 unterbinden. Um diesem unerwünschten und gegebenenfalls gefahrbringenden Umstand zu begegnen, ist eine Auslöseeinrichtung 6 mit einem ASi-Slave 60 und einem mit diesem über Steuerleitungen 61 verbundenen U- oder A-Auslöser 50 vorgesehen, der seinerseits eine Auslösung des Schutzschalters 5 in der Stromzuleitung 3 bewirken kann. Der ASi-Slave 60 kommuniziert über eine weitere Busleitung 600 mit dem Steuerbus 2 und damit mit der an den Steuerbus 2 angeschlossenen Steuereinrichtung 7 und ist von dieser über eine entsprechende Adressierung direkt ansprechbar.

Kommt es nun während des Betriebs der in der Figur 1 dargestellten Anordnung zu einer Störung eines Schützes 10 innerhalb eines Motorstarters 1.1 bzw. 1.2, beispielsweise durch ein Verschweißen der Hauptkontakte 10.1, 10.2, 10.3 oder einer mechanischen Beschädigung, so dass sich das vormals geschlossene Schütz 10 nicht mehr öffnen lässt, so fließt ungehindert Strom von der Stromzuleitung 3 zum Elektromotor 4 und veranlasst dessen Betrieb. Wird nun von der Steuereinrichtung 7 über den Steuerbus 2 durch entsprechende Adressierung beispielsweise an den Motorstarter 1.1 ein Ausschaltbefehl abgegeben und lässt sich dessen Schütz 10 z. B. infolge verschweißter Hauptkontakte 10.1, 10.2, 10.3 nicht öffnen, so fließt trotz des entsprechenden Ausschaltbefehles der Strom zum Elektromotor 4 und wird über die Messeinrichtung 12 des Motorstarters 1.1 gemessen. Der Motorstarter 1.1 gibt nunmehr nach dem Empfang des an ihn gerichteten Ausschaltbefehles als Rückmeldung den nach wie vor von seiner Messeinrichtung 12 gemessenen Strom über die Busleitung 13 auf den Steuerbus 2 und damit an die Steuereinrichtung 7 ab, die wiederum aufgrund dieser Information die Nichtausführung des gewünschten Schaltbefehles erkennen kann. Unmittelbar hieran anschließend spricht die Steuereinrichtung 7 über den Steuerbus 2 den mittels der Busleitung 600 angeschlossenen ASi-Slave 60 an, der nunmehr den U- oder A-Auslöser 50 betätigt, so dass in unmittelbarer Folge der an den Auslöser 50 angeschlossene Schutzschalter 5 öffnet und somit die Stromzuleitung 3 unterbricht, so dass auch der ungewollte Stromfluss unterbrochen wird und die gesamte Anlage in einen sicheren Zustand überführt wird. Nachfolgend kann an der Steuereinrichtung der Ort des aufgetretenen Fehlers, hier Motorstarter 1.1 abgefragt und entsprechend behoben werden.

Demgegenüber wird bei einem unbeschädigten Schütz 10 des Motorstarters 1.1 unmittelbar nach dem Empfang eines Ausschaltbefehles von der Steuereinrichtung 7 über den Steuerbus 2 das Schütz 10 entsprechend betätigt und die im jeweiligen Motorstarter 1.1 bzw. 1.2 angeordnete Messeinrichtung 12 erfasst nunmehr keinen fließenden Strom mehr, was als entsprechende Bestätigung der Steuereinrichtung 7 über den Steuerbus 2 rückgemeldet werden kann, so dass keine Veranlassung besteht, den ASi-Slave 60 zum Öffnen des Schutzschalters 5 zu betätigen.

Der Vorteil der vorangehend beschriebenen Anordnung besteht insbesondere darin, dass eine Vielzahl von Motorstartern 1.1, 1.2 etc. an eine gemeinsame und mit lediglich einem Schutzschalter 5 abgesicherte Stromzuleitung 3 angeschlossen werden können, wobei durch direkte Auswertung des auf einen Schaltbefehl der Steuereinrichtung 7 folgenden Stromfluss durch den angesprochenen Motorstarter 1.1 bzw. 1.2 die Funktion des jeweils im angesprochenen Motorstarter 1.1, 1.2 vorgesehenen Schützes 10 überprüft und bei Vorliegen einer Unregelmäßigkeit sofort der gesamte Stromfluss durch Öffnung des Schutzschalters 5 von der Steuereinrichtung unterbrochen werden kann. Darüber hinaus lässt sich die erfindungsgemäße Anordnung ohne großen Aufwand an bereits vorhandenen mit einem Steuerbus 2, insbesondere ASi-Bus vernetzten Motorstartern nachrüsten, da lediglich ein ASi-Slave 60 mit entsprechendem U- oder A-Auslöser 50, der auf den Schutzschalter 5 einwirkt, an den Steuerbus 2 angeschlossen und die Steuereinrichtung 7 entsprechend programmiert werden muss. Eine solche Nachrüstung ist sogar im laufenden Betrieb bereits vorhandener Anlagen möglich.

Die vorangehend beschriebene Anordnung ermöglicht eine Detektion eines in einem Motorstarter vorliegenden Fehlers und eine gewollte Abschaltung des Schutzschalters 5 innerhalb einer Reaktionszeit von 20 bis 50 ms.

## Patentansprüche

1. Anordnung zur Überwachung von an eine Stromzuleitung (3) angeschlossenen und über einen Steuerbus (2) mit einer Steuereinrichtung (7) kommunizierenden Motorstartern (1.1, 1.2), wobei jeder Motorstarter (1.1, 1.2) eine Messeinrichtung (12) zur Messung des durch den Motorstarter (1.1, 1.2) geleiteten Stroms aufweist und in der Stromzuleitung (3) ein Schutzschalter (5) vorgesehen ist und dem Schutzschalter (5) eine Auslöseeinrichtung (6) zugeordnet ist, die von der Steuereinrichtung (7) über den Steuerbus (2) in Abhängigkeit von dem durch den Motorstarter (1.1, 1.2) geleiteten Strom ansteuerbar ist.

2. Anordnung nach Anspruch 1, **dadurch gekennzeichnet, dass** von den Motorstartern (1.1, 1.2) eine den gemessenen Strom repräsentierende Rückmeldung über den Steuerbus (2) an die Steuereinrichtung (7) abgebbar ist.

3. Anordnung nach einem der Ansprüche 1 oder 2, **dadurch gekennzeichnet, dass** die Auslöseeinrichtung (6) von der Steuereinrichtung (7) bei Vorliegen eines über den Steuerbus (2) an einen Motorstarter (1.1, 1.2) gesendeten Ausschaltbefehles und eines nachfolgend von der Messeinrichtung (12) des angesprochenen Motorstarters (1.1 bzw. 1.2) gemessenen Stromes ansteuerbar ist.

4. Anordnung nach einem der Ansprüche 1 bis 3, **dadurch gekennzeichnet, dass** der Schutzschalter (5) mittels der von der Steuereinrichtung (7) angesteuerten Auslöseeinrichtung (6) öffenbar ist.

5. Anordnung nach einem der Ansprüche 1 bis 4, **dadurch gekennzeichnet, dass** der Steuerbus (2) als ASi-Bus ausgebildet ist.

6. Anordnung nach einem der Ansprüche 1 bis 5, **dadurch gekennzeichnet, dass** die Auslöseeinrichtung (6) einen mit dem Steuerbus (2) kommunizierenden ASi-Slave (60) und einen von diesem steuerbaren U- oder A-Auslöser (50) umfasst.

7. Anordnung nach einem der Ansprüche 1 bis 6, **dadurch gekennzeichnet, dass** die Stromzuleitung (3) als Energiebus ausgebildet ist.
